(19) Europäisches Patentamt
European Patent Office
Office européen des brevets

(11) Publication number: **0 102 133**
**A2**

(12) # EUROPEAN PATENT APPLICATION

(21) Application number: 83301278.4

(22) Date of filing: 08.03.83

(51) Int. Cl.³: C 25 D 5/56
C 23 C 3/02, C 08 L 71/04

(30) Priority: 26.03.82 US 362306

(43) Date of publication of application: 07.03.84 Bulletin 84/10

(84) Designated Contracting States: DE FR GB IT NL

(71) Applicant: GENERAL ELECTRIC COMPANY
1 River Road
Schenectady New York 12305(US)

(72) Inventor: Haaf, William Robert
19 Scotch Pine Drive
Voorheesville New York 12186(US)

(72) Inventor: Legere, Charles Fred
R.D. 3, Box 105
Selkirk New York 12158(US)

(72) Inventor: Shank, Charles Philip
P.O. Box 204
Averill Park New York 12018(US)

(74) Representative: Brock, Peter William et al,
Michael Burnside & Partners 2 Serjeants' Inn Fleet Street
London EC4Y 1HL(GB)

(54) **Metallized article composed of polyphenylene ether resin, high impact polystyrene, alumina and, optionally, a styrene-butadiene radial teleblock copolymer.**

(57) The adhesion of metal deposited from a metal deposition bath on the surface of an article molded from a thermoplastic composition of a polyphenylene ether resin is considerably improved by including alumina in the substrate composition, as described. The resultant parts, in stressed and unstressed form, exhibit bond strengths of at least 0.7 Kg/cm, initially and after aging for several days, and are much more likely to withstand conditions normally causing separation of the metal deposit from the substrate.

EP 0 102 133 A2

TITLE MODIFIED
see front page

METALLIZED ARTICLE COMPOSED OF PPE, HIPS, ALUMINA AND, OPTIONALLY, A STYRENE-BUTADIENE RADIAL TELEBLOCK COPOLYMER

The term "polyphenylene ether resin" is well known as defining a family of thermoplastic materials which can be shaped with a variety of articles. These materials and methods for their preparation are described in the patent literature, for example, in U.S. Patents No. 3,306,874; 3,306,875; 3,257,357 and 3,257,358.

It is known that polyphenylene ether resins can be combined with polystyrene in a wide range of proportions to form compositions which possess improved properties. Such compositions are disclosed in U.S. Patent No. 3,383,435.

Efforts have been made to adapt polyphenylene ether resin compositions to serve after molding as electroplatable substrates for the chemical deposition of metal, e.g., copper, nickel, silver, gold, tin, etc. Metallized plastic articles enjoy widespread use, for example, in printed circuit board manufacture, as novelty items, as automobile trim, etc.

The practicability of the finished product is usually dependent on the strength of the bond formed between the electrodeposited or chemically plated plastic substratum and the metal deposit, however. In the case of substrates made of molded polyphenylene ether resin compositions, it has been found that the magnitude of the plastic/metal bond strength is time-dependent. The initial bond strength is relatively low, but gradually increases for a period of 10-15 days thereafter until an asymptotic value of 0.89 - 1.78 Kg/cm is attained. The initial and asymptotic bond strength values will be referred to in this disclosure as the "initial adhesion" and the "final adhesion", respectively.

During the first few days after formation, before the plastic/metal bond strength has appreciably increased, the metallized article is most susceptible to damage. This can take the form of plastic/metal separation with the appearance of "blisters" on the metal deposit, often resulting from handling or exposure to below normal temperatures. Moreover, both the initial and final adhesion of the metal deposit is often reduced because of residual surface "stresses" in the plastic substrate which result from the use of shorter molding cycles in the molding process. Residual surface stresses can lower the final adhesion by as much as 25 to 50 percent relative to the bond strength of the stress-free counterpart. This further detracts from the utility of the finished product.

Thus, it remains desirable to improve the initial adhesion of the metal deposit to the plastic substrate in the unstressed state; and also to improve both the initial and final adhesion of the metal deposit to the plastic substrate in the "stressed" state.

The discovery has now been made that if a small amount of alumina is incorporated in a blend of polyphenylene ether resin and a polystyrene-containing impact modifier, the resultant composite after molding exhibits markedly improved adhesion, initially and finally, to electrodeposited and electrolessly (chemically) deposited metals. This holds true both for unstressed substrates made of the blend, as well as for substrates containing residual stresses induced during the molding cycle.

The invention thus provides, in one aspect, an improvement in the process of manufacturing metallized plastic articles from polyphenylene ether resins. Another facet of the invention comprises metallized articles incorporating the improved blend.

Preferred for use in the present invention are polyphenylene ethers having the formula:

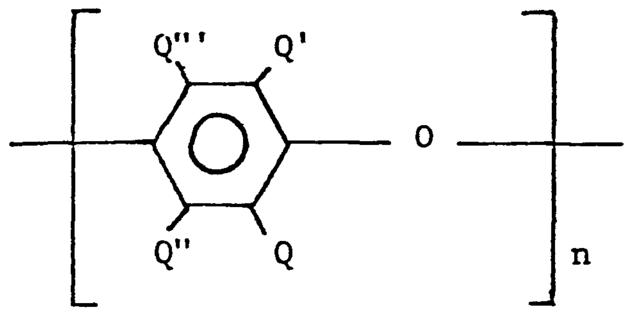

wherein Q, Q', Q" and Q"', are independently selected from the group consisting of hydrocarbon radicals, halohydrocarbon radicals having at least two carbon atoms between the halogen atom and the phenol nucleus, hydrocarbonoxy radicals and halohydrocarbonoxy radicals having at least two carbon atoms between the halogen atoms and the phenol nucleus, and Q', Q" and Q"' in addition may be halogen with the proviso that Q and Q' are preferably free of a tertiary carbon atom; and n represents the total number of monomer residues and is an integer of at least 50.

Especially preferred is poly(2,6-dimethyl-1,4-phenylene) ether.

These can be prepared by following the teachings described in the patents mentioned above.

As indicated previously, the polyphenylene ether resin is blended with one or more impact modifiers. The impact modifier can be a styrene homopolymer in admixture or otherwise modified with an elastomer such as natural or synthetic rubber, or it can be a styrene containing elastomeric copolymer or terpolymer.

By way of illustration, the impact modifier may be a homopolymer such as polystyrene, polychlorostyrene, poly(alpha-methyl styrene), or poly(para-methyl styrene) which has been modified by natural or synthetic rubber, for example, polybutadiene, polyisoprene, butyl rubber, EPDM rubber, natural rubber, polysulfide rubbers, polyurethane rubbers, etc., elastomeric styrene copolymers such as styrene-acrylonitrile copolymers (SAN), styrene-butadiene copolymers, styrene-acrylonitrile-butadiene terpolymers (ABS), block copolymers of styrene and a diene in their various forms, for example, A-B, A-B-A, A-B-AB, A-B-A-B-A, etc., random or radial teleblock copolymers of these same materials, as well as hydrogenated forms of the linear, random and radial copolymers in which the aliphatic unsaturation, e.g., of the "B" (diene) block has been reduced; and admixtures of any of the above mentioned styrene homopolymers with any of the above-mentioned elastomeric styrene co- and terpolymers.

As is generally understood, the polyphenylene ether resin and impact modifier are combinable in widely variant proportions, for example, from 1:99 to 99:1 parts by weight.

The adhesion promoting additive which constitutes the basis of the invention, alumina, can be employed in the described blends in any of its available forms. The preferred type, however, is hydrated alumina, added most conveniently as finely divided granules or particles.

Only small amounts of the alumina are necessary to achieve the described improvement in adhesion, in general, between 0.05 and 0.5 wt. % based on the combined weight of polyphenylene ether and impact modifier(s).

The compositions can and often do contain other ingredients, such as the supplementary non-resinous agents heretofore customarily present in polyphenylene ether resin molding compositions to improve certain other chemical and physical properties of the moldings. These additives include antioxidants, plasticizers, flame retardants, strengthening fibers (for example, glass fibers and graphite whiskers), mineral fillers, dyes, pigments, and so forth. These are generally added in minor but effective amounts of from 1% to 50% by weight.

The compositions are prepared in the conventional manner by blending the ingredients to form a pre-mix, extruding the pre-mix on a single or twin-screw extruder, cooling and chopping the extrudate and injection or compression molding the pellets to the desired shape and size. Incorporation of the alumina in the blend may be facilitated by forming a pre-dispersion of the alumina in the impact modifier and then adding to the other ingredients.

The resultant molded article or piece or part, whether it be in the form of a panel, toy, automobile grill, etc., is then employed as a substrate in a conventional metal deposition process in which metal is deposited thereon using electrolytic or electroless chemical technique or a combination of both. Such procedures are well known in the art and, in general, involve immersion of the substrate in a chemical bath with application of an electrical current as by means of an external battery (electolytic); or by use of chemical sensitization of the substrate surface to render it receptive to metal deposition from the bath without use of an external current source (electroless chemical deposition).

The following examples illustrate the invention. These are intended only as showing particular embodiments and are not to be construed as a limitation on the scope of the invention. All parts by weight.

EXAMPLE 1

A blend (Sample 1) was prepared by tumbling 25 parts of poly(2,6-dimethyl-1,4-phenylene ether)(PPO, General Electric Co.), 65 parts of rubber modified high impact polystyrene (Foster Grant's 834, containing about 9% polybutadiene rubber), 10 parts of a radial teleblock copolymer of styrene and butadiene (Solprene 411, Phillips Petroleum Co.), and 0.2 parts of hydrated alumina (Hydral 710, manufactured by Aluminum Co. of America); extruding the pre-blend thus formed through a Werner-Pfleiderer twin-screw extruder at 302°C cooling the extrudate, chopping it into pellets and molding into test panels at an injection temperature of 260°C (88°C mold temperature), and using a prolonged molding fill time of 10 seconds to form a substantially stress-free article.

For purposes of comparison, in one case a similar formulation (Sample 2) was prepared, containing the same ingredients in the same amounts, except that the alumina was omitted; and in another case the same formulation (Sample 3), except that the alumina was omitted and the Solprene 411 was replaced by a modifier known to be effective for plating of polyphenylene high impact-polystyrene blends: Rohm & Haas's terpolymer of styrene-butadiene and methyl methacrylate (Acryloid KM-611).

After molding, all three panels were processed through a MacDermid electroless nickel pre-plate line. The panels were then electroplated with 0.02 mm of copper, 0.0025 mm of nickel and 0.00025mm of chromium. The bond strength of the metal deposit to the panel surface was measured on an Instron machine. The results are shown below:

TABLE 1

| Sample | Initial adhesion, (Kg/cm) | Final adhesion, (Kg/cm) |
|---|---|---|
| 1 (containing S 411 and H-710) | 1.04 | 1.75 |
| 2 (containing S 411 but no H-710) | 0.45 | 1.61 (approx.) |
| 3 (containing no S 411 and no H-710) | 0.21 | 1.48 |

Initial adhesion measured 20 hours after plating, at 23°C.

Final adhesion measured 15 days after plating, at 23°C.

## EXAMPLE 2

Blends having the same composition as Samples 1 and 3 of Example 1 were prepared and injection molded under the same conditions of temperature, but using a shorter molding fill time of 1.0 seconds to obtain a "stressed" panel. Metal was deposited on the surface of the panels using the same procedure as in the previous example. The adhesion of the metal deposit to the panel was evaluated and the results are shown in Table 2.

TABLE 2

| Sample | Initial adhesion, Kg/cm | Final adhesion, Kg/cm |
|---|---|---|
| 4 (same as sample 1) | 0.75 | 1.13 |
| 5 (same as Sample 3) | 0.23 | 0.68 |

It is noteworthy that a final adhesion of about 0.7 Kg/cm is often considered to be the minimum level of acceptability. As shown in Table 2, the formulation without the alumina (sample 5) just barely meets this criterion, at 0.68 Kg/cm.; while the formulation in accordance with the invention, sample 4, containing alumina, easily meets this criterion with room to spare. Experience has shown that Sample 5 is more likely to fail under thermocycle test conditions than is sample 4.

Obviously, other modifications and variations may be made in light of the above disclosure. For instance, instead of poly-(2,6-dimethyl-1,4-phenylene ether) resin, copolymers such as poly(2,6-dimethyl-co-2,3,6-trimethyl-1,4-phenylene ether) can be substituted.

CLAIMS:

1. A process for the production of a metallized article by the deposition of metal from an electrochemical or electroless deposition solution on a substrate made of a molded polyphenylene ether resin composition characterized in that the polyphenylene ether resin composition contains an amount of alumina effective for increasing the adhesion of the metal deposit.

2. A process according to Claim 1, characterized in that the polyphenylene ether resin composition comprises one or more impact modifiers for the resin, and alumina.

3. A process according to Claim 1 or 2 characterized in that the alumina content is between 0.05 and 0.5 weight % of the total composition.

4. A process according to any preceding Claim, characterized in that the deposition is carried out electrochemically using an electroyltic metal-deposition bath.

5. A metallized article, comprising a substrate made of a molded composition of a polyphenylene ether resin, an impact modifier and a metal deposit thereon, characterized in that the composition contains an adhesion promoting amount of alumina.

6. A metallized article according to Claim 5, characterized in that the impact modifier is a rubber modified high impact polystyrene, a block copolymer of styrene and butadiene, a radial teleblock copolymer of styrene and butadiene or a combination of any of the foregoing.

7. A metallized article according to Claim 5 or 6, characterized in that the alumina content is between 0.05 and 0.5 wt. % of the total composition.

8. A metallized article according to any of Claims 5 to 7, characterized in that the alumina is hydrated.

9. A metallized article according to any of Claims 5 to 8, characterized in that the metal deposit has been formed electrolytically.

10. A metallized article according to any of Claims 5 to 9, characterized in that the final substrate/metal deposit bond strength is at least 0.7 Kg/cm as measured on an Instron instrument.